(19) **Europäisches Patentamt / European Patent Office / Office européen des brevets**

(11) **EP 3 822 300 B1**

(12) **EUROPEAN PATENT SPECIFICATION**

(45) Date of publication and mention
of the grant of the patent:
**30.08.2023 Bulletin 2023/35**

(21) Application number: **19834289.1**

(22) Date of filing: **09.07.2019**

(51) International Patent Classification (IPC):
*C08J 3/05* (2006.01)    *C08G 63/06* (2006.01)
*C08G 63/91* (2006.01)

(52) Cooperative Patent Classification (CPC):
**C08G 63/912; C08G 63/06**

(86) International application number:
**PCT/JP2019/027091**

(87) International publication number:
**WO 2020/013163 (16.01.2020 Gazette 2020/03)**

(54) **POLYLACTIC ACID COPOLYMER AND METHOD FOR PRODUCING SAME**

POLYMILCHSÄURECOPOLYMER UND HERSTELLUNGSVERFAHREN DAFÜR

COPOLYMÈRE D'ACIDE POLYLACTIQUE ET SON PROCÉDÉ DE PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.07.2018 JP 2018130660**

(43) Date of publication of application:
**19.05.2021 Bulletin 2021/20**

(73) Proprietor: **Toyo Seikan Group Holdings, Ltd.
Shinagawa-ku
Tokyo 141-8627 (JP)**

(72) Inventors:
• **SHIBATA, Kouki
Yokohama-shi, Kanagawa 240-0062 (JP)**
• **YOSHIKAWA, Seishi
Yokohama-shi, Kanagawa 240-0062 (JP)**
• **KATAYAMA, Tsutaki
Yokohama-shi, Kanagawa 240-0062 (JP)**

(74) Representative: **J A Kemp LLP
80 Turnmill Street
London EC1M 5QU (GB)**

(56) References cited:
**WO-A1-2006/083044      WO-A1-2016/129501
WO-A1-2017/145539      JP-A- 2008 247 956
JP-A- 2010 116 482      JP-A- 2014 134 090
JP-A- 2019 065 159**

**Description**

Technical Field:

This invention relates to a polylactic acid copolymer and a method of producing the same. More specifically, the invention relates to a polylactic acid copolymer featuring improved hydrophilic property of the polylactic acid and a method of producing the same.

Background Art:

The polylactic acid has been known as a biodegradable resin that is friendly to the environment. By utilizing this property in recent years, there has been proposed a method of using the polylactic acid in the form of a powder or a fiber being added to a fracturing fluid for extracting resources such as shale gases (patent document 1). That is, even when left to remain in the ground, the polylactic acid readily undergoes the decomposition. For instance, even when used for extracting the shale gases that are present in the stratum not so deep from the surface of the ground, the polylactic acid does not adversely affect the environment.

In recent years, furthermore, there has also been proposed an art of using the polylactic acid for a soil cleanup process (what is called bioremediation) that utilizes microorganisms (patent document 2). The lactic acid formed by the hydrolysis of the polylactic acid serves as a nutrient source for the microorganisms. By sprinkling the polylactic acid over the soil so they may infiltrate into the soil, therefore, propagation and activity of the microorganisms can be accelerated.

Here, in the uses described above, a high degree of affinity to water is required in addition to a suitable degree of hydrolizability. Namely, in the use in the field of extracting resources, it is required that the polylactic acid quickly disperses in the water when it is thrown into a large quantity of water in the site of extraction. In the soil cleanup process, on the other hand, it is required that the polylactic acid quickly infiltrates into the soil. To meet the above requirements, therefore, the polylactic acid has to exhibit a high degree of affinity to water (i.e., hydrophilic property).

So far, however, the polylactic acid did not have so much high degree of hydrolizability or a sufficient degree of hydrophilic property. There remained such a problem that when thrown into the water, for instance, the polylactic acid did not precipitate but often floated on the surface of the water.

A means has long been employed to copolymerize the polylactic acid with another polyester in order to improve its properties.

A patent document 3, for example, discloses a lactic acid-oxalate block copolymer constituted by polylactic acid blocks and polyoxalate blocks, the polylactic acid blocks each having a number average molecular weight of 2,000 to 50,000. This copolymer has a high crystallinity and, hence, has a larger toughness than that of the polylactic acid.

Further, a patent document 4 quoted by the present applicant discloses a biodegradable resin composition including a sparingly hydrolysable biodegradable resin (A), an ester decomposition accelerator (B) that comprises an easily hydrolysable polymer, and an ester decomposition acceleration assistant (C). The patent document 4 uses a polylactic acid as the sparingly hydrolysable biodegradable resin (A), uses an acid-releasing polyester such as polyoxalate as the ester decomposition accelerator (B) and, further, uses a basic inorganic compound such as calcium carbonate or sodium carbonate as the ester decomposition acceleration assistant (C).

The technology of the patent document 4 helps improve the hydrolyzability of the sparingly hydrolysable resins such as polylactic acid and the like.

The lactic acid-oxalate block copolymer of the patent document 3 and the biodegradable resin composition of the patent document 4 are both obtained by melt-kneading the polylactic acid with another component, and are effective in improving mechanical properties and hydrolizability of the polylactic acid. However, neither of them works to improve the hydrophilic property of the polylactic acid. Namely, at the present moment, almost no study has been made in an attempt to improve the hydrophilic property of the polylactic acid.

Prior Art Documents:

Patent Documents:

Patent document 1: U.S. Patent No. 7,833,950
Patent document 2: Japanese Patent Laid-Open No. 2011-104551
Patent document 3: Japanese Patent Laid-Open No. 2008-101032
Patent document 4: Japanese Patent No. 5633291

Outline of the Invention:

Problems that the Invention is to Solve:

It is, therefore, an object of the present invention to provide a polylactic acid copolymer having more improved hydrolizability and hydrophilic property than those of the polylactic acid and a method of producing the same.

Means for Solving the Problems:

The present inventors have conducted the experiments extensively concerning the hydrolyzability and hydrophilic property of the polylactic acids. As a result, the inventors have discovered that when a polylactic acid having a molecular weight which is not so high and an acid-releasing polyester are melt-kneaded together to copolymerize the polylactic acid by the ester interchange, there is obtained a polylactic acid copolymer that is highly amorphous and that exhibits improved hydrophilic property and hydrolyzability. The present invention was thus completed.

According to the present invention, there is provided a polylactic acid copolymer obtained by the copolymerization of a polylactic acid with an acid-releasing ester polymer capable of releasing an acid other than the lactic acid upon the hydrolysis, characterized in that a quantity of heat of fusion $\Delta H$ thereof is not more than 20 J/g as measured by using the DSC when the temperature is elevated the second time , wherein the copolymer contains the copolymer units stemming from the acid-releasing ester polymer in an amount of 0.5 to 35% by mass and has a weight average molecular weight in a range of 15,000 to 40,000;

According to the present invention, furthermore, there is provided a method of producing the polylactic acid copolymer as defined in claim 1 characterized by melt-kneading a polylactic acid having a weight average molecular weight of 50,000 to 300,000, an acid-releasing ester polymer capable of releasing an acid other than the lactic acid upon the hydrolysis and a basic inorganic compound at a temperature of not lower than 200°C.

Effects of the Invention:

The polylactic acid copolymer of the present invention is the one in which the polylactic acid is copolymerized with the acid-releasing ester segment, and has a quantity of heat of fusion $\Delta H$ of not more than 20 J/g as measured by using the DSC when the temperature is elevated the second time. The polylactic acid copolymer, therefore, is highly amorphous. Namely, the polylactic acid copolymer is produced by melt-kneading the polylactic acid of a relatively low molecular weight with the acid-releasing ester polymer to interchange the esters; i.e., through the melt-kneading, the polylactic acid acquires a molecular weight that is being decreased and is also copolymerized due to the interchange of esters. As a result, the polylactic acid copolymer is maintained to be highly amorphous. Here, when the temperature is elevated the first time, the quantity of heat of fusion $\Delta H$ varies depending upon the thermal hysteresis or upon the degree of thermal hysteresis . In the present invention, therefore, the amorphousness is specified relying upon the quantity of heat of fusion $\Delta H$ of when the temperature is elevated the second time.

Further, the polylactic acid copolymer contains the copolymer units stemming from the acid-releasing ester polymer in an amount of 0.5 to 35% by mass and, further, has a weight average molecular weight in a range of as low as 15,000 to 40,000 due to a decrease in the molecular weight of the polylactic acid put to the copolymerization. Namely, the polylactic acid copolymer of the present invention has no regular structure of high order and, therefore, undergoes a quick crystalline decomposition. Besides, the polylactic acid copolymer exhibits a very high degree of hydrophilic property as compared to the conventional polylactic acids or the polylactic acid copolymers.

Further, as demonstrated in Examples appearing later, the polylactic acid copolymer of the present invention has a short TOC release life of the material as calculated from the sustained release amount of TOC (sustained release amount of organic matter) per a unit day. Measurement of the crystallinity by the X-ray diffraction shows that the crystallinity decreases with the passage of time.

Further, even when pulverized into a fine powdery form, the polylactic acid copolymer exhibits a property of quickly precipitating in the still water. The conventional polylactic acids in fine powdery forms float when thrown into the still water.

As described above, the polylactic acid copolymer of the present invention has a high degree of hydrophilic property (water dispersing property) and hydrolyzability, and is hence very suited for use as a soil reforming agent and as an aqueous dispersion solution for extracting underground resources.

Moreover, despite of being highly amorphous, the polylactic acid copolymer of the present invention can be mechanically pulverized excellently and can be used in the form of a granular material having a median particle diameter (D50) of, for example, not larger than 20 $\mu$m. That is, use in the granular form is very advantageous in controlling the infiltration into the soil and controlling the rate of hydrolysis. Specifically, this is a great advantage when the polylactic acid copolymer is sprinkled as a soil reforming agent and in preparing an aqueous dispersion solution that is to be thrown into water to extract underground resources.

Brief Description of the Drawing:

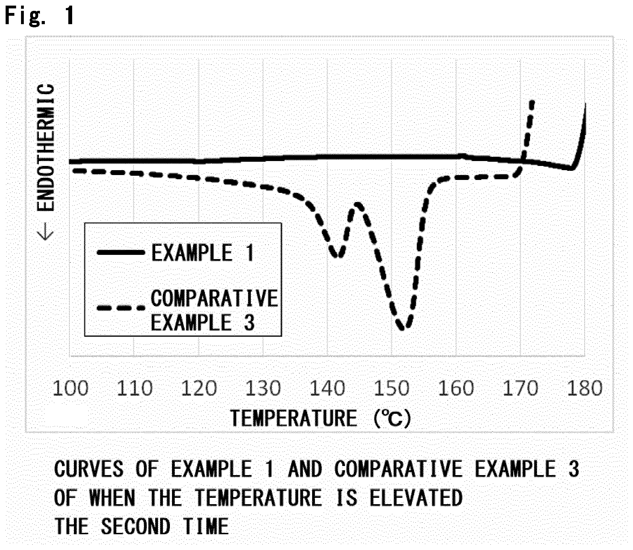

[Fig. 1] It is a graph showing curves of the polylactic acid copolymers obtained in Example 1 and Comparative Example 3 measured by using the DSC when the temperature is elevated the second time.

Modes for Carrying Out the Invention:

<Production of the polylactic acid copolymers>

The polylactic acid copolymer of the present invention is produced by melt-kneading a polylactic acid and an acid-releasing ester polymer together in the presence of a basic inorganic compound. Through the melt-kneading, the polylactic acid acquires a decreased molecular weight while being copolymerized due to the ester interchange with the acid-releasing ester polymer. There is thus obtained the desired polylactic acid copolymer.

Polylactic acids;

The polylactic acid to be used can be either a 100% poly-L-lactic acid or a 100% poly-D-lactic acid. There can be, further, used a molten blend of the poly-L-lactic acid and the poly-D-lactic acid, a random copolymer of the L-lactic acid and the D-lactic acid, or a block copolymer thereof. The polylactic acid is freeze-pulverized to prepare a powdery sample thereof which is then dispersed in water to prepare an aqueous dispersion solution of a concentration of 10 mg/10 ml. The aqueous dispersion solution is incubated at 45°C for one week. The TOC (total amount of organic carbon) in the residue is not more than 5 ppm, and the hydrolyzability is not so much high. It is desired that the polylactic acid has a weight average molecular weight in a range of 50,000 to 300,000 and, specifically, 150,000 to 250,000. The weight average molecular weight is calculated relying on the GPC (gel permeation chromatography) using a polystyrene as the standard substance.

Further, the polylactic acid may be copolymerized with small amounts of various kinds of aliphatic polyhydric alcohols, aliphatic polybasic acids, hydroxycarboxylic acids or lactones so far as there is no loss in the ester interchangeability with the acid-releasing ester polymer that will be described later.

As the polyhydric alcohols, there can be exemplified ethylene glycol, propylene glycol, butane diol, octane diol, dodecane diol, neopentyl glycol, glycerin, pentaerythritol, sorbitan and polyethylene glycol.

As the polybasic acids, there can be exemplified oxalic acid, succinic acid, adipic acid, sebasic acid, glutaric acid, decanedicarboxylic acid, cyclohexanedicarboxylic acid and terephthalic acid. As the hydroxycarboxylic acids, there can be exemplified glycolic acid, hydroxypropionic acid, hydroxyvaleric acid, hydroxycaproic acid and mandelic acid.

As the lactones, there can be exemplified caprolactone, butylolactone, valerolactone, propiolactone, undecalactone, glycolide and mandelide.

Acid-releasing ester polymers;

The acid-releasing ester polymer used as a component with which the polylactic acid is to be copolymerized, is a polyester that releases an acid other than the lactic acid upon the hydrolysis. The hydrolysis is accelerated by the release of acid. That is, upon using the acid-releasing ester polymer as a component for copolymerizing the polylactic acid, it is made possible to accelerate a decrease in the molecular weight of the polylactic acid when it is being melt-kneaded and to impart the polylactic acid copolymer obtained by the ester interchange with a property to release the organic matter in a sustained manner (property to release the lactic acid).

The acid released from the ester polymer can be represented by oxalic acid and glycolic acid. The oxalic acid, however, is most desired from the standpoint of accelerating a decrease in the molecular weight of the polylactic acid when it is being melt-kneaded, imparting the polylactic acid copolymer with a high degree of property for releasing the organic matter in a sustained manner and, besides, without adversely affecting the environment.

In the invention, therefore, a polyoxalate having the oxalic acid as an acid unit is most desirably used as the acid-releasing ester polymer.

There is no specific limitation on the polyoxalate so far as it has the oxalic acid as an acid unit. As the alcohol unit, for example, there can be used a homopolymer or a copolymer having a polyhydric alcohol, such as ethylene glycol, propylene glycol, butane diol, octane diol, dodecane diol, neopentyl glycol, glycelin, pentaerythritol, sorbitan, bisphenol A and polyethylene glycol. Among them, however, there can be preferably used the homopolymer or the copolymer without containing aromatic alcohol, such as bisphenol A and, specifically, the one that contains ethylene glycol, propylene glycol or butane diol as the alcohol unit from the standpoint of effects upon the environment.

The acid-releasing ester polymer should be capable of effectively accelerating a decrease in the molecular weight of the polylactic acid based on the decomposition thereof, and should be capable of forming a polylactic acid copolymer that is highly amorphous, highly hydrophilic and has a low molecular weight. From these points of view, it is desired that the acid-releasing ester polymer has a reduced viscosity of about 0.4 to 1.0 dL/g, and is used in an amount of 1 to 50 parts by mass and, specifically, 2 to 20 parts by mass per 100 parts by mass of the polylactic acid.

Here, the reduced viscosity of the acid-releasing ester polymer is measured by the solution viscosity measurement by using such a solvent as chloroform or 1,1,1,2,2,2-hexafluoro 2-propanol that dissolves the acid-releasing ester polymer.

Basic inorganic compounds;

The invention uses a basic inorganic compound together with the acid-releasing ester polymer. The polylactic acid and the acid-releasing ester polymer are melt-kneaded together in the presence of the basic inorganic compound.

The basic inorganic compound is a component that accelerates the decomposition of the polylactic acid and the acid-releasing ester polymer. Therefore, the molecular weights of the polymers decrease during the melt-kneading.

The basic inorganic compound can be represented by a basic compound that contains an alkali metal or an alkaline earth metal, or by zeolite and an ion-releasing filler that releases ions of alkali metal or alkaline earth metal.

As the basic compound that contains the alkali metal or the alkaline earth metal, there can be exemplified sodium carbonate, potassium carbonate, calcium carbonate, magnesium carbonate, sodium hydrogencarbonate, potassium hydrogencarbonate, sodium silicate, potassium silicate, calcium silicate, magnesium silicate, sodium phosphate, calcium hydroxide and magnesium hydroxide.

As the zeolite, there can be used a variety of kinds of natural or synthetic zeolites that contains ions of alkali metals or alkaline earth metals as interchangeable ions. As the ion-releasing filler, there can be used oxide glasses such as aluminosilicate glass, borosilicate glass and soda-lime glass that contain alkali metals or alkaline earth metals, as well as fluoride glasses such as zirconium fluoride glass.

These basic inorganic compounds can be used alone or in two or more kinds in combination.

Among the compounds exemplified above, the present invention, preferably, uses the basic compound containing calcium and/or sodium, zeolite capable of releasing calcium ions and/or sodium ions, and filler that releases calcium ions and/or sodium ions and, particularly preferably, uses the calcium carbonate or the sodium carbonate from such a standpoint that these compounds little affect the environment, do not adversely affect the properties of the polylactic acid copolymer that is formed, and are not decomposed during the melt-kneading.

It is, further, desired that the basic inorganic compound has a median particle diameter (D50) of not larger than 10 $\mu$m and, specifically, in a range of 0.01 $\mu$m to 5 $\mu$m from the standpoint of attaining a homogeneous dispersion during the melt-kneading.

In the invention, the basic inorganic compound is used in an amount of 3 to 20 parts by weight and, specifically, 5 to 15 parts by weight per 100 parts by weight of the polylactic acid. When the inorganic compound is used in too large amounts, the molecular weight of the polylactic acid would be accelerated to become too small during the melt-kneading deteriorating the mechanical pulverizability of the obtained polylactic acid copolymer, and it would become difficult to pulverize the polylactic acid copolymer. When the amount of the inorganic compound is too small, on the other hand, the molecular weight of the polylactic acid cannot be decreased to a sufficient degree. Accordingly, the obtained polylactic acid copolymer does not become amorphous to a sufficient degree, and it would become difficult to attain a desired high degree of hydrophilic property.

Melt-kneading;

In the invention, the polylactic acid and the acid-releasing ester polymer are melt-kneaded together in the presence of the basic inorganic compound, whereby the polylactic acid and the acid-releasing ester polymer undergo the decomposition due to the presence of the basic inorganic compound. The acid that is formed causes the polylactic acid to be further decomposed. There, further, takes place a reaction (ester interchange) among the ester polymer that has released the acid, the residue and the polylactic acid, whereby the polylactic acid copolymer is obtained as desired.

The melt-kneading can be easily carried out in a kneading portion of, for example, an extruder. Specifically, the melt-kneading is carried out at a temperature at which the polylactic acid and the acid-releasing ester polymer will not undergo the thermal decomposition, e.g., at a temperature of not lower than 200°C and, specifically, 220 to 250°C. The melt-kneading is conducted for at least not less than 2 minutes and, specifically, about 3 to about 10 minutes so that the above-mentioned reactions are all completed. The polylactic acid and the acid-releasing polyester can be thus effectively copolymerized while having their molecular weights being decreased.

<Polylactic acid copolymer>

The polylactic acid copolymer obtained as described above has a polylactic acid block due to the polylactic acid of a decreased molecular weight and a copolymer block due to the ester interchange with the acid-releasing ester polymer. For instance, the polylactic acid block is represented by the following formula (1) while the copolymer block due to the acid-releasing ester polymer, in the case when a polyoxalate is used, is represented by the following formula (2).

$$-CH(CH_3)-COO- \qquad (1)$$

$$-CO-CO-O-R-O- \qquad (2)$$

In the invention, the polylactic acid copolymer has a quantity of heat of fusion $\Delta H$ in a range of not more than 20 J/g and, specifically, not more than 10 J/g as measured from a curve of when the temperature elevated the second time using DSC.

Usually, from the DSC curve of elevating the temperature the second time, the quantity of heat of fusion $\Delta H$ is represented by the following formula.

$$\Delta Hm = \Delta Hm' - \Delta Hc$$

wherein $\Delta Hm'$ is a quantity of heat of fusion (J/g) inclusive of the heat of crystallization while the temperature is being elevated, and $\Delta Hc$ is a quantity of heat (J/g) generated by the crystallization.

When attention is given to the crystallization, matters should be considered based on the values of $\Delta Hm$. In the present invention, however, attention is given to how easily the crystals can be formed. Therefore, what matters is the numerical values of, specifically, $\Delta H'm$ even while the temperature is being elevated the second time. The smaller the value, the lower the crystallinity meaning that the crystals are formed little even when the polylactic acid copolymer is subjected to the decomposition in water over extended periods of time. It will, therefore, be learned that the polylactic acid copolymer of the present invention permits a little increase in the crystallinity even when it is subjected to the decomposition in water over extended periods of time.

The polylactic acid copolymer of the present invention is obtained by copolymerizing the conventional polylactic acid by lowering the molecular weight thereof and by interchanging esters. Therefore, the polylactic acid copolymer has a weight average molecular weight in a range of 15,000 to 40,000, and contains the copolymer unit stemming from the acid-releasing ester polymer, i.e., contains the copolymer unit represented by the above-mentioned formula (2) in an amount in a range of 0.5 to 35% by mass.

Here, the weight average molecular weight of the polylactic acid copolymer is measured relying on the GPC by using a polystyrene as the standard substance. Further, formation of the copolymer can be confirmed relying on the $^1$H NMR.

The polylactic acid copolymer of the present invention has no regular structure of high order and, therefore, the crystals thereof undergo a quick decomposition. Unlike the case of having a regular structure of high order, therefore, the polylactic acid copolymer easily undergoes the decomposition starting from any part of the crystals, and easily releases the lactic acid. As demonstrated in Examples appearing later, therefore, the polylactic acid copolymer has a short TOC release life that is expected from the sustained release amount of TOC (sustained release amount of organic matter) per a unit day. It has also been confirmed that accompanying the decomposition, the crystallinity also decreases with the passage of time as measured by the X-ray diffraction.

Due to a decrease in the molecular weight, furthermore, the polylactic acid copolymer exhibits excellent mechanically pulverizing property. Through the mechanical pulverizing, for example, the polylactic acid copolymer can be formed into a granular material of a median particle diameter (D50) of not larger than 20 $\mu$m and, specifically, not larger than 10 $\mu$m.

Due to its markedly improved hydrophilic property, further, the polylactic acid copolymer in a granular form, when thrown into still water, quickly precipitates therein. When the water in which the polylactic acid copolymer has been thrown is stirred to let the particles thereof dispersed therein followed by leaving the water to remain still for one hour, the particles do not precipitate any more or float, and the dispersion condition is maintained stably. When, for example, the conventional polylactic acid is thrown into the still water, the particles thereof do not precipitate. When left to stand still for one hour after having been stirred, further, the conventional polylactic acid particles undergo the precipitation and separation.

As described above, the polylactic acid copolymer of the present invention has excellent property for being mechanically pulverized. Upon mechanically pulverizing into a granular form, therefore, the polylactic acid copolymer can be handled and transported (being packaged) excellently.

Due to its excellent dispersibility in water, furthermore, the polylactic acid copolymer is very useful as a soil reforming agent and an aqueous dispersion solution for extracting underground resources. For example, when sprinkled on the surface of the ground, the polylactic acid copolymer quickly infiltrates in the ground and stably releases the organic component (lactic acid) that serves as a nutrient source for microorganisms. When thrown into water, the polylactic acid copolymer quickly disperses therein. Besides, after the passage of a predetermined period of time, the polylactic acid copolymer quickly undergoes the hydrolysis. Therefore, the dispersion solution can be effectively used as an aqueous dispersion solution such as fracturing liquid for extracting underground resources.

The polylactic acid copolymer of the invention is obtained in a form containing the basic inorganic compound. Here, however, the basic inorganic compound does not adversely affect the dispersion of the polylactic acid copolymer in water, sustained release of the organic matter or the mechanical pulverizability. Therefore, the polylactic acid copolymer can be put to the use described above without dare to separating the basic inorganic compound though it can be separated by washing with the water.

Furthermore, the polylactic acid copolymer of the invention can be shaped into a variety of forms through the thermal forming and can, therefore, be used being shaped in a predetermined form while being blended with various kinds of polymers, as required. Depending on the uses, further, there can be also added a variety of additives such as known plasticizer, carboxyl group sealing agent, heat stabilizer, photo stabilizer, antioxidant, ultraviolet ray absorber, flame retarder, coloring agent, pigment, filler, parting agent, antistatic agent, perfume, lubricant, foaming agent, antibacterial-antifungal agent, nucleating agent, lamellar silicate, enzyme, etc.

EXAMPLES

The invention will now be described by using the following Experimental Examples.

<Synthesis of the materials>

<Synthesis of PEOx>

40 Kilograms (339 mols) of dimethyl oxalate, 23.2 kg (374 mols) of ethylene glycol, 2.9 kg (32.2 mols) of 1,4-butane diol and 8.4 g of dibutyltin oxide were put into a 150-liter reaction oven that could be heated by using a heat transfer medium, and were heated to a liquid temperature of 110°C in a nitrogen stream, and polymerized under normal pressure. After the methanol has started to distil off, the reaction was continued in this state for one hour and 30 minutes maintaining the same temperature. After one hour and 30 minutes have passed, the temperature was elevated up to 130°C at an elevating rate of 10°C/hour. The temperature was, further, elevated up to 190°C at a rate of 20°C /hour. The amount of the liquid recovered was 21.2 kg.

Thereafter, the polymerization was conducted under reduced pressure at a liquid temperature of 190°C while reducing the pressure down to 0.1 kPa to 0.8 kPa. The obtained polymer was taken out and was heat-treated at 90°C for 2 hours and then at 120°C for 2 hours.

<Synthesis of PBOx>

40 Kilograms (339 mols) of dimethyl oxalate, 30.5 kg (339 mols) of 1, 4-butane diol and 5.7 g of dibutyltin oxide were put into the same reaction oven as the one described above, and were heated to a liquid temperature of 100°C in a nitrogen stream and polymerized under normal pressure. After the methanol has started to distil off, the reaction was continued in this state for one hour maintaining the same temperature. After one hour has passed, the temperature was elevated up to 110°C at an elevating rate of 10°C/hour. The temperature was, further, elevated up to 180°C at a rate of 20°C/hour. The amount of the liquid recovered was 21.9 kg.

Thereafter, the polymerization was conducted under reduced pressure at a liquid temperature of 200°C while reducing the pressure down to 0.1 kPa to 0.8 kPa. The obtained polymer was taken out and was heat-treated at 90°C for 2 hours and then at 120°C for 2 hours.

<Methods of evaluation>

<Measuring the reduced viscosities of PEOx and PBOx>

Apparatus: Canon Fenceke viscometer
Solvents: 1,1,1,2,2,2-Hexafluoro 2-propanol (PEOx), chloroform (PBOx)

Temperature: 25°C
Preparation of sample: 10 mL of the solvent was added to 40 mg of the sample followed by mild stirring at room temperature. After having confirmed with the eye that the sample has been dissolved, the solvent was filtered with a 0.45-$\mu$m filter to obtain a sample for measurement.

<Measuring the molecular weights of the PLA and the PLA copolymer>

The PLA and the PLA copolymer were measured for their molecular weights under the following conditions.

Apparatus: High-speed GPC apparatus, HLC-8320, manufactured by Tohsoh Co.
Detector: Differential refractive index detector RI
Column: Super Multipore HZ-M (two units)
Solvent: Chloroform
Flow rate: 0.5 mL/min
Column temperature: 40°C
Preparation of sample: 3 mL of the solvent was added to about 10 mg of the sample, and the mixture thereof was left to stand at room temperature. After having confirmed with the eye that the sample has been dissolved, the solvent was filtered with the 0.45-$\mu$m filter. Polystyrene was used as the standard substance.

<Determining the copolymerization rate in the PLA by the $^1$H NMR>

The copolymerization rate of the acid-releasing ester in the PLA was found by calculation by removing the compound polymer that was reprecipitated with the solvent and, thereafter, determining the aqueous solution decomposed into the monomer by the $^1$H NMR. Described below are the method of preparing the sample and the conditions for the NMR measurement.
One gram of the sample was dropped in 15 mL of chloroform and was dissolved therein. The dissolving state was observed with the eye. After there was seen no change in the dissolving state, the chloroform was filtered through the 0.45-$\mu$m filter. When the filtrate was dropped on 300 mL of methanol, there was seen a string-like precipitate or a cloudy liquid. The string-like precipitate was recovered by the suction filtration whereas the cloudy liquid was recovered by the centrifugal separation. The recovered product was washed with water, dried at 40°C in vacuum and was, thereafter, heat-treated together with 1 g of water at 120°C in a 20-mL pressure-resistant vial. The heat treatment was continued until the solid component was completely decomposed and could no longer been seen with the eye. The decomposed aqueous solution was measured as the sample by the NMR.

Apparatus: JNM-ECA manufactured by Nihon Denshi Co.
Solvent: Heavy water
Cumulative number: 16 times
Measuring temperature: Room temperature
Preparation of sample: About 0.1 mL of the sample was added dropwise to an NMR sample tube followed by the dropwise addition of 0.5 mL of heavy water to prepare a sample.
Method of determination: When a peak area due to hydrogen in the CH group of main chain of the lactic acid was regarded to be 1.00, peak areas due to hydrogen in the methylene groups of ethylene glycol and butane diol were denoted as $A_{EG}$ and $A_{BDO}$, and the copolymerization ratios were calculated according to the following formulas (1) and (2). The peaks due to hydrogen in the methylene group of butane diol were observed at two places having an equal area. Therefore, the total area of the two places was denoted as $A_{BDO}$.

$$\text{(Copolymerization rate of PEOx)} = (29 \times A_{EG})/(72 + 29 \times A_{EG}) \qquad -- (1)$$

$$\text{(Copolymerization rate of PBOx)} = (18 \times A_{BDO})/(72 + 18 \times A_{BDO}) \qquad -- (2)$$

<Determining the copolymerization rate in the PLA by the $^1$H NMR and by the amount of the dissolved residue>

In only the Example 5 appearing later, the polymerization rate of the acid-releasing ester was measured by the method described here.

(Uncopolymerized PEOx component):

0.05 Grams of the sample was dissolved in 1.5 mL of a chloroform/1,1,1,2,2,2-hexafluoro 2-propanol = 9/1 solution, and was left to stand still for 4 hours. Thereafter, the undissolved component was recovered by filtration and was dried at 40°C under reduced pressure. The obtained solid component was regarded to be the uncopolymerized PEOx component from which a mass was measured and an uncopolymerized rate was calculated. (Copolymerized and uncopolymerized PEOx components):

0.1 Grams of the sample was heat-treated together with 1 g of water at 120°C in a 20-mL pressure-resistant vial.

The heat treatment was continued until the solid component was completely decomposed and could no longer been seen with the eye. The decomposed aqueous solution was measured as the sample by the $^1$H NMR.

Apparatus: JNM-ECA manufactured by Nihon Denshi Co.
Solvent: Heavy water
Cumulative number: 16 times
Measuring temperature: Room temperature
Preparation of sample: About 0.1 mL of the sample was added dropwise to an NMR sample tube followed by the dropwise addition of 0.5 mL of heavy water to prepare a sample.
Method of determination: The PEOx component was determined relying on the above-mentioned formula (1). What are determined here are the ratios of the copolymerized and uncopolymerized PEOx components.
(Calculating the copolymerization rate of the PEOx) : The rate of the copolymerized PEOx was calculated by subtracting the uncopolymerization ratio of the PEOx from the ratios of the copolymerized and uncopolymerized PEOx components that were obtained above.

<Measuring the crystallinities after left at 50°C for 30 days>

Changes in the crystallinities after dipped in water for extended periods of time were evaluated as accelerated testing relying on the crystallinities after dipped in water maintained at 50°C for 30 days.

One gram of the sample in the form of a coarse powder as obtained by using a cutter mill and about 2 g of pure water were mixed together in a 20-mL vial, and were left to stand in an oven maintained at 50°C. After 30 days have passed, the mixture thereof was taken out, and the powdery sample was taken out by the centrifugal separation while washing it with pure water. The sample that was centrifugally separated was dried at 40°C for 4 hours under reduced pressure. The dried sample was

evaluated by the DSC.

Apparatus: EXTAR 6000 manufactured by Seiko Instruments Co.
Evaluation: A quantity of heat of fusion (ΔH) was calculated from an area of an endothermic peak observed from a temperature rising curve of the first time of when the temperature was elevated starting from 0°C at an elevation rate of 10°C/min. The quantity of heat of fusion (ΔH) was then divided by the quantity of heat of fusion, i.e., 94 J/g, of the polylactic acid crystals and was, thereafter, multiplied by 100 times. A value thus obtained was regarded to be the crystallinity (%).

<Measuring the quantity of heat of fusion ΔH of when the temperature is elevated the second time>

Apparatus: EXTAR 6000 manufactured by Seiko Instruments Co.
Evaluation: An endothermic peak was observed from the temperature rising curve of the first time of when the temperature was elevated starting from 0°C at an elevation rate of 10°C/min. The temperature was then held at 170°C to 180°C for one minute and was, thereafter, cooled down to 0°C at a descending rate of 10°C/min. Thereafter, the temperature was elevated again the second time at the same elevation rate as above. An area of an endothermic peak observed from the temperature rising curve of this second time was regarded to be the quantity of heat of fusion (ΔH) of the second time.

<Measuring the sustained release amount of TOC per a unit day>

150 Milligrams of the sample was dipped in 30 mL of pure water and was left to stand still at 25°C. Pure water was renewed every after a week. Pure water of the fourth week was measured for the TOC and from which the sustained release amount of the TOC per a unit day was calculated according to the following formula (3).

$$C = B \times (1/5) \times (1/7) \qquad\qquad --- (3)$$

wherein C is the released amount of the organic carbon (mg) per gram of the sample per day, and B is the TOC value (ppm) exhibited by the sample that was prepared.

Presuming that the organic carbon would be released in a sustained manner at this value even after the fourth week and that the organic carbon that is released would be all the lactic acid monomer, the day was estimated when the samples would extinguish as they are released in a sustained manner, i.e., the TOC release life X (days) of the materials was estimated according to the following formula (4).

$$X = 1000/(C \times 6) \qquad\qquad --- (4)$$

The TC (total carbon) and the IC (inorganic carbon) were measured under the conditions described below, and the IC was subtracted from the TC to obtain the TOC.

Apparatus: TOC-L manufactured by Shimazu Seisakusho Co.
Carrier gas: Highly pure air
Carrier gas flow rate: 150 mL/min
Calibration substances: Sodium hydrogenphthalate and sodium hydrogencarbonate.
Combustion temperature: 680°C
Preparation of sample for measurement: About 20 mL of the dipping solution was taken directly into a sample vial and was measured.

<Evaluating the crystallinities by the X-ray diffraction measurement>

Apparatus: X-ray diffraction apparatus, SmartLab 9kW, manufactured by Rigaku Co.
Voltage-current: 45 kV·200 mA
X-ray wavelength: CuK$\alpha$
Optical system: Parallel beam method, counter monochrome method
Method of calculating the crystallinity: Calculated from the area of the crystalline peak and the area of the amorphous peak in accordance with the following formula (5),

$$Xc = 100 \times Ac/(Ac + Aa) \qquad\qquad --- (5)$$

wherein Xc is a crystallinity (%), Ac is an area of the crystalline peak, and Aa is an area of the amorphous peak.

<Measuring the floatability concentration using methanol>

The floatability concentration was measured in order to evaluate the dispersibility of the fine powdery sample in the water.
0.5 Grams of the sample finely pulverized by using a jet mill and having a median particle diameter (D50) of not more than 20 $\mu$m as measured by the laser diffraction-light scattering method, was fallen into an aqueous solution containing methanol in a 100-mL glass bottle, and was stirred by using a magnetic stirrer at 280 rpm for 3 minutes . Thereafter, the mixture thereof was left to stand still for 3 minutes, and it was confirmed if any powdery material remained floating on the surface of the water. When some powder was seen floating, it was judged that the sample was not precipitating. In this case, another 5 g of methanol was added and the same experiment was conducted. Measurement was started after 50 g of water and 30 g of methanol were added. The methanol concentration was defined to be a floatability concentration at a moment when no powder was seen floating. Dispersibilities in the water were compared and examined.

<Materials used>

The REVODE 101 produced by Kaisei Seibutsu Zairyo Co. was used as the PLA (polylactic acid resin) . The molecular weight thereof when used as the raw material was in a range of 120,000

< Mw < 170,000.

The PEOx and PBOx which were kinds of the acid-releasing ester resins, were those polymerized that were described in the foregoing. The reduced viscosities were 0.84 dL/g in the case of PEOx and 0.49 dL/g in the case of PBOx.
The sodium carbonate was the sodium carbonate (purity of 99.8 + %) produced by Wako Junyaku Kogyo Co., the 50% lactic acid was the Musashino lactic acid 50F (50% by mass) produced by Musashino Kagaku Kenkyujo Co., the heavy water was the heavy water ("100%" 99. 96 atom%D) produced by Sigma·Aldrich Co., the methanol was the methanol (99.7+% for high-speed liquid chromatography) produced by Wako Junyaku Kogyo Co., and the chloroform was the chloroform (99.7+% for high-speed liquid chromatography) produced by Wako Junyaku Kogyo Co.

<Synthesis of the polylactic acid copolymers>

(Examples 1 to 4)

The PLA, acid-releasing ester and sodium carbonate were quantitatively fed by using quantitative feeders into a continuous type biaxial extruder, and were melt-kneaded together therein. Table 1 below shows the conditions employed by the Examples.

[Table 1]

| Sample preparation conditions in the continuous type extruder in Examples. | | | | | |
|---|---|---|---|---|---|
| | Amount of PLA fed (kg/ hour) | Acid-releasing ester | Amount of acid-releasing ester fed (kg/ hour) | Amount of sodium carbonate fed (kg/ hour) | Kneading temperature (°C) |
| Ex. 1 | 41 | PEOx | 4.5 | 5 | 230 |
| Ex. 2 | 44 | PEOx | 1.8 | 5 | 230 |
| Ex. 3 | 44 | PEOx | 1.8 | 5 | 225 |
| Ex. 4 | 44 | PBOx | 1.8 | 5 | 220 |

(Example 5)

100 Grams of the PLA, 100 g of the PEOx and 20 g of the sodium carbonate were weighed, and were melt-kneaded in a batch type biaxial extruder. A moment at which the temperature of the resin has reached 230°C and the sodium carbonate was thrown in, was regarded to be the starting point of the reaction time. After kneaded for 2 minutes, the sample was taken out.

(Comparative Example 1)

The PLA and the sodium carbonate were quantitatively fed by using quantitative feeders into the continuous type extruder, and were melt-kneaded together therein in the same manner as in Examples 1 to 4. The conditions were as shown in Table 2 below.

[Table 2]

| | Amount of PLA fed (kg/hour) | Acid-releasing ester | Amount of acid-releasing ester fed (kg/hour) | Amount of sodium carbonate fed (kg/hour) | Kneading temperature (°C) |
|---|---|---|---|---|---|
| Comp. Ex. 1 | 44 | none | 0 | 5 | 220 |

Sample preparation conditions in the continuous type extruder in Comparative Example.

(Comparative Example 2)

180 Grams of the PLA, 20 g of the PEOx and 20 g of the sodium carbonate were weighed, and were melt-kneaded in the same batch type biaxial extruder as the one used in Example 5. A moment at which the temperature of the resin has reached 230°C and the sodium carbonate was thrown in, was regarded to be the starting point of the reaction time. After kneaded for 5 minutes, the sample was taken out.

(Comparative Example 3)

The PLA and the PEOx were quantitatively fed by using coil feeders into the continuous type biaxial extruder, and were melt-kneaded together therein. The PLA and the PEOx were fed at rates of 45 kg/hour and 5 kg/hour, respectively, and were kneaded at a temperature of 230°C. 250 Kilograms of the thus kneaded material was then thrown into a 2000-liter reaction oven followed by the addition of 500 kg of 50% lactic acid and by the heating at 100°C for 5 hours to lower the molecular weight. Thereafter, the solvent was separated by filtration, washed with water, and was dried at 70°C under reduced pressure.

<Properties of the polylactic acid copolymer>

Table 3 shows weight average molecular weights Mw of the obtained samples, copolymerization rates of the acid-releasing esters, quantities of heat of fusion ΔH of when the temperature is elevated the second time, crystallinities after stored in water at 50°C for 30 days, methanol concentrations of when the powder has precipitated and sustained release lives of TOC.

In Examples 1 to 4, the crystallinities after stored in water at 50°C for 30 days were as low as not more than 30%. Further, the powders precipitated in the aqueous solutions of methanol concentrations of not more than 45% proving favorable dispersibilities in water. In Examples 1 to 3, furthermore, TOC release lives calculated from the release amounts of TOC after 30 days ranged from 300 to 900 days, demonstrating higher hydrolyzabilities than those of Comparative Examples 1 and 3 in which the acid-releasing esters were not copolymerized. Example 5 demonstrated a very higher rate of acid-releasing ester copolymerization than those of Examples 1 to 4, manifesting very excellent dispersibility in water and a short TOC release life. It was, therefore, learned that the sample of Example 5 was highly hydrolysable . The sample of Comparative Example 2 possessed such a high molecular weight that it could not be pulverized down into sizes of not more than 20 $\mu$m.

[Table 3]

| | Mw of PLA | Acid-releasing ester | Copolymerization rate of acid-releasing ester (wt%) | ΔH of when heated up the second time (J/g) | Crystallinity after stored at 50°C for 30 days (%) | Methanol concentration of when powder precipitated (wt%) | TOC release life (days) |
|---|---|---|---|---|---|---|---|
| Ex. 1 | 19,100 | PEOx | 5.21 | 0.0 | - | 41.2 | 312 |
| Ex. 2 | 29, 000 | PEOx | 2.04 | 3.2 | 22.3 | 44.4 | 606 |
| Ex. 3 | 34,700 | PEOx | 2.28 | 1.3 | 26.6 | 44.4 | 806 |
| Ex. 4 | 29, 000 | PBOx | 2.03 | 4.2 | 26.5 | 44.4 | 4,575 |
| Ex. 5 | 18,500 | PEOx | 31.9 | 10.0 | 34.1 | - | 114 |

Properties in Examples and Comparative Examples.

(continued)

| Properties in Examples and Comparative Examples. | | | | | | | |
|---|---|---|---|---|---|---|---|
| | Mw of PLA | Acid-releasing ester | Copolymerization rate of acid-releasing ester (wt%) | ΔH of when heated up the second time (J/g) | Crystallinity after stored at 50°C for 30 days (%) | Methanol concentration of when powder precipitated (wt%) | TOC release life (days) |
| Comp. Ex. 1 | 16,100 | none | 0 | 0.0 | 25.2 | 50.0 | 1, 277 |
| Comp. Ex. 2 | 51,100 | PEOx | 4.78 | 0.7 | 33.7 | could not be pulverized | - |
| Comp. Ex. 3 | 19,500 | none | 0 | 34.0 | 54.3 | 56.5 | 1, 020 |

Fig. 1 shows temperature rising curves of the samples obtained in Example 1 and Comparative Example 3 measured in the second time by using the DSC. In the case of Comparative Example 3, peaks of melting crystals were detected even when the temperature was elevated the second time. In the case of Example 1, on the other hand, no peak was observed in the melting crystals.

The samples obtained in Example 1 and Comparative Example 3 were measured and determined by the wide angle X-ray diffraction before and after the samples were dipped in water and stored therein at 25°C for 180 days. The results were as shown in Table 4.

In the case of Comparative Example 3, the sample already exhibited a high degree of crystallinity just when it was dipped in water, i.e., when the sample was being prepared. The sample exhibited a further increased degree of crystallinity after it was dipped in water for 180 days. In the case of Example 1, on the other hand, the sample exhibited a crystallinity smaller than that of Comparative Example 3 even when it was being prepared. After dipped in water for 180 days, the sample exhibited a crystallinity that has decreased down to be not higher than 20%.

[Table 4]

| Changes in the crystallinities after the samples were dipped in water for extended periods of time. | | |
|---|---|---|
| | Crystallinity just when dipped in water (%) | Crystallinity after dipped in water for 180 days (%) |
| Example 1 | 29 | 16 |
| Comp. Ex. 3 | 58 | 79 |

**Claims**

1. A polylactic acid copolymer obtained by the copolymerization of a polylactic acid with an acid-releasing ester polymer capable of releasing an acid other than the lactic acid upon the hydrolysis, **characterized in that** said polylactic acid copolymer has a quantity of heat of fusion ΔH of not more than 20 J/g as measured by using the DSC when the temperature is elevated the second time, contains the copolymer units stemming from said acid-releasing ester polymer in an amount of 0.5 to 35% by mass, and has a weight average molecular weight in a range of 15,000 to 40,000, wherein the heat of fusion ΔH and the weight average molecular weight are determined by the methods disclosed in the specification.

2. The polylactic acid copolymer according to claim 1, wherein when the polylactic acid copolymer is pulverized into a fine powder having a median particle diameter (D50) of not larger than 20 $\mu$m as measured by the laser diffraction-light scattering method, the floatability concentration thereof by using methanol is less than 50% by mass.

3. The polylactic acid copolymer according to claim 1, wherein said acid-releasing ester polymer is a polyoxalate.

4. The polylactic acid copolymer according to claim 1, wherein the polylactic acid copolymer assumes the form of a granular material having a median particle diameter (D50) of not larger than 20 $\mu$m as measured by the laser diffraction-light scattering method.

5. Use of the polylactic acid copolymer according to claim 1 as a soil reforming agent.

6. Use of the polylactic acid copolymer according to claim 1 as an aqueous dispersion solution for extracting underground resources.

7. A method of producing the polylactic acid copolymer described in claim 1 **characterized by** melt-kneading a polylactic acid having a weight average molecular weight of 50,000 to 300,000 as determined by the method disclosed in the specification, an acid-releasing ester polymer capable of releasing an acid other than the lactic acid upon the hydrolysis and a basic inorganic compound at a temperature of not lower than 200°C.

**Patentansprüche**

1. Polymilchsäure-Copolymer, das durch Copolymerisation einer Polymilchsäure mit einem säurefreisetzenden Esterpolymer erhalten wird, das in der Lage ist, bei der Hydrolyse eine andere Säure als die Milchsäure freizusetzen, **dadurch gekennzeichnet, dass** das Polymilchsäure-Copolymer eine Menge an Schmelzwärme $\Delta$H von nicht mehr als 20 J/g aufweist, wie unter Verwendung der DSC gemessen, wenn die Temperatur zum zweiten Mal erhöht wird, das Copolymer Einheiten, die von dem säurefreisetzenden Esterpolymer stammen, in einer Menge von 0,5 bis 35 Massen-% enthält und ein gewichtsmittleres Molekulargewicht in einem Bereich von 15.000 bis 40.000 aufweist, wobei die Schmelzwärme $\Delta$H und das gewichtsmittlere Molekulargewicht durch die in der Patentschrift offenbarten Verfahren bestimmt werden.

2. Polymilchsäure-Copolymer nach Anspruch 1, wobei, wenn das Polymilchsäure-Copolymer zu einem feinen Pulver mit einem mittleren Teilchendurchmesser (D50) von nicht mehr als 20 $\mu$m pulverisiert wird, wie durch das Laserbeugungslichtstreuungsverfahren gemessen, die Schwimmfähigkeitskonzentration davon unter Verwendung von Methanol weniger als 50 Massen-% beträgt.

3. Polymilchsäure-Copolymer nach Anspruch 1, wobei das säurefrei setzende Esterpolymer ein Polyoxalat ist.

4. Polymilchsäure-Copolymer nach Anspruch 1, wobei das Polymilchsäure-Copolymer die Form eines körnigen Materials mit einem mittleren Teilchendurchmesser (D50) von nicht mehr als 20 $\mu$m annimmt, wie durch das Laserbeugungslichtstreuungsverfahren gemessen.

5. Verwendung des Polymilchsäure-Copolymers nach Anspruch 1 als ein erdverbesserndes Mittel.

6. Verwendung des Polymilchsäure-Copolymers nach Anspruch 1 als eine wässrige Dispergierungslösung zum Extrahieren von Ressourcen unter der Erde.

7. Verfahren zum Herstellen des Polymilchsäure-Copolymers nach Anspruch 1, **gekennzeichnet durch** Schmelzkneten einer Polymilchsäure mit einem gewichtsmittleren Molekulargewicht von 50.000 bis 300.000, wie durch das in der Patentschrift beschriebene Verfahren bestimmt, eines säurefreisetzenden Esterpolymers, das in der Lage ist, bei der Hydrolyse eine andere Säure als die Milchsäure freizusetzen, und einer basischen anorganischen Verbindung bei einer Temperatur von nicht weniger als 200 °C.

**Revendications**

1. Copolymère d'acide polylactique obtenu par la copolymérisation d'un acide polylactique avec un polymère ester libérant un acide capable de libérer un acide autre que l'acide lactique lors de l'hydrolyse, **caractérisé en ce que** ledit copolymère d'acide polylactique a une quantité de chaleur de fusion $\Delta$H de pas plus de 20 J/g tel que mesuré en utilisant la DSC lorsque la température est augmentée la deuxième fois, contient les unités de copolymère provenant dudit polymère d'ester libérant de l'acide en une quantité de 0,5 à 35 % en masse, et a un poids moléculaire moyen en poids dans une plage de 15 000 à 40 000, dans lequel la chaleur de fusion $\Delta$H et la masse moléculaire moyenne en poids sont déterminées par les procédés décrits dans la description.

2. Copolymère d'acide polylactique selon la revendication 1, dans lequel, lorsque le copolymère d'acide polylactique est pulvérisé en une poudre fine ayant un diamètre médian de particule (D50) non supérieur à 20 $\mu$m tel que mesuré par la diffraction laser : procédé de diffusion de la lumière, la concentration de flottabilité de celui-ci en utilisant du méthanol est inférieure à 50 % en masse.

3. Copolymère d'acide polylactique selon la revendication 1, dans lequel ledit polymère d'ester libérant de l'acide est un polyoxalate.

4. Copolymère d'acide polylactique selon la revendication 1, dans lequel le copolymère d'acide polylactique prend la forme d'un matériau granulaire ayant un diamètre médian de particule (D50) non supérieur à 20 $\mu$m tel que mesuré par le procédé de diffusion de la lumière par diffraction laser.

5. Utilisation du copolymère d'acide polylactique selon la revendication 1, en tant qu'agent de reformage de sol.

6. Utilisation du copolymère d'acide polylactique selon la revendication 1, comme solution de dispersion aqueuse pour l'extraction de ressources souterraines.

7. Procédé de production du copolymère d'acide polylactique décrit dans la revendication 1, **caractérisé par** le malaxage à l'état fondu d'un acide polylactique ayant un poids moléculaire moyen en poids de 50 000 à 300 000 tel que déterminé par le procédé décrit dans la description, un polymère d'ester libérant un acide capable de libérer un acide autre que l'acide lactique lors de l'hydrolyse et un composé inorganique basique à une température non inférieure à 200°C.

Fig. 1

CURVES OF EXAMPLE 1 AND COMPARATIVE EXAMPLE 3
OF WHEN THE TEMPERATURE IS ELEVATED
THE SECOND TIME

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7833950 B
- JP 2011104551 A
- JP 2008101032 A
- JP 5633291 B